# EUROPEAN PATENT APPLICATION

(11) **EP 1 341 334 A1**
(43) Date of publication of application: **03.09.2003**
(21) Application number: 02290500.4
(22) Date of filing: 28.02.2002
(51) Int. Cl.: H04J 14/06, H04J 14/02

(54) **Polarization alternating transmission systems, apparatuses, and methods**

(71) Applicant: Corvis Algety, 22300 Lannion (FR)
(72) Inventor: Merlaud, Fabien, 22700 Perros-Guirec (FR); Le Guen, Daniel, 22700 Louannec (FR); Le Guyader, Bertrand, 22260 Plouec du Trieux (FR); Meyer, Christophe, 22300 Lannion (FR)
(74) Representative: Ahner, Francis

(57) **Abstract**

Methods, apparatuses, and systems for communication systems. One embodiment of the present invention is an optical communications system including a first group of transmitters producing a first spectral group containing at least two optical signals, wherein each of the signals in the first spectral group has a polarization orientation which is non-parallel to adjacent signals within the first spectral group. the system also includes a second group of transmitters producing a second spectral group containing at least two optical signals, wherein each of the signals in the second spectral group has a polarization orientation which is non-parallel to adjacent signals within the second spectral group, and wherein the polarization orientation of the first spectral group is independent of the polarization orientation of the second spectral group. The polarization orientation of signals within each spectral group may be, for example, orthogonal or other non-parallel orientations. The present invention also includes apparatuses and methods according to the present invention

## Description

### FIELD OF THE INVENTION

The present invention relates to transmission methods, apparatuses, and systems for communication systems and, more particularly, to polarization alternating optical transmission methods, apparatuses, and systems.

### BACKGROUND OF THE INVENTION

Polarization alternating of adjacent signal channels in wavelength division multiplexed systems is a known technique to improve transmission performance. However, polarization alternating has several drawbacks. For example, prior art polarization alternating systems require numerous polarization maintaining components, connections, and splices. Unfortunately, performance rapidly degrades as the number of successive polarization maintaining components, connections, and splices increases. Furthermore, it is expensive and difficult to manufacture systems containing a large number of polarization maintaining components, connections, and splices associated with the prior art.

Another problem with prior art polarization alternating is that it is difficult and expensive to monitor and control the polarization of signals in the transmission lines. As a result, after signals are transmitted, it is not practical to determine or control their polarization within the transmission lines. Because the polarization cannot be determined or controlled in a practical manner, there is no control over the polarization of signals added in one part of the system relative to signals which are added in other parts of the system. Because commercial transmission systems have many points at which signals are added and dropped, prior art polarization alternating systems do not provide a practical solution to provide the signals in the desired relative polarization, because they teach controlling relative polarizations between all channels, homogeneously over the entire signal wavelength division multiplexed optical band.

### BRIEF DESCRIPTION OF THE INVENTION

The present invention relates to transmission methods, apparatuses, and systems for communication systems. One embodiment of the present invention is an optical communications system including a first group of transmitters producing a first spectral group containing at least two optical signals, wherein each of the signals in the first spectral group has a polarization orientation which is non-parallel to adjacent signals within the first spectral group. the system also includes a second group of transmitters producing a second spectral group containing at least two optical signals, wherein each of the signals in the second spectral group has a polarization orientation which is non-parallel to adjacent signals within the second spectral group, and wherein the polarization orientation of the first spectral group is independent of the polarization orientation of the second spectral group. The polarization orientation of signals within each spectral group may be, for example, orthogonal or other non-parallel orientations.

The system according to the present invention may include two or more transmitters producing polarized optical signals, a polarization maintaining coupler, and polarization maintaining fibers connecting the transmitters to the coupler, wherein the polarization maintaining fiber is connected to the transmitters and the coupler such that optical signals at adjacent optical wavelengths have non-parallel polarization orientations.

The present invention also includes methods of transmitting optical signals, such as transmitting a first spectral group including at least two signals and wherein the signals in the first spectral group have polarization orientations which are non-parallel to adjacent signals in the first spectral group, and transmitting a second spectral group including at least two signals wherein the signals in the second spectral group have polarization orientations which are non-parallel to adjacent signals in the second spectral group, wherein transmitting the second spectral group is independent of the polarization orientation of the first spectral group.

The present invention offers a cost effective way to improve performance in optical communications systems without the disadvantages of the prior art. Those and other advantages of the present invention will be described hereinbelow.

### BRIEF DESCRIPTION OF THE DRAWINGS

Embodiments of the present invention will now be described, by way of example only, with reference to the accompanying drawings, wherein:
Figs. 1 and 2 show examples optical communications systems;
Fig. 3 shows a signal profile of several signal channels which form a spectral group;
Fig. 4 shows an embodiment of a sub-rack according to the present invention;
Figs. 5-7 show a signal profile for two adjacent spectral groups; and
Fig. 8 shows another embodiment of the present invention with several groups of transmitters are utilized at the same location to transmit several spectral groups.

### DETAILED DESCRIPTION OF THE INVENTION

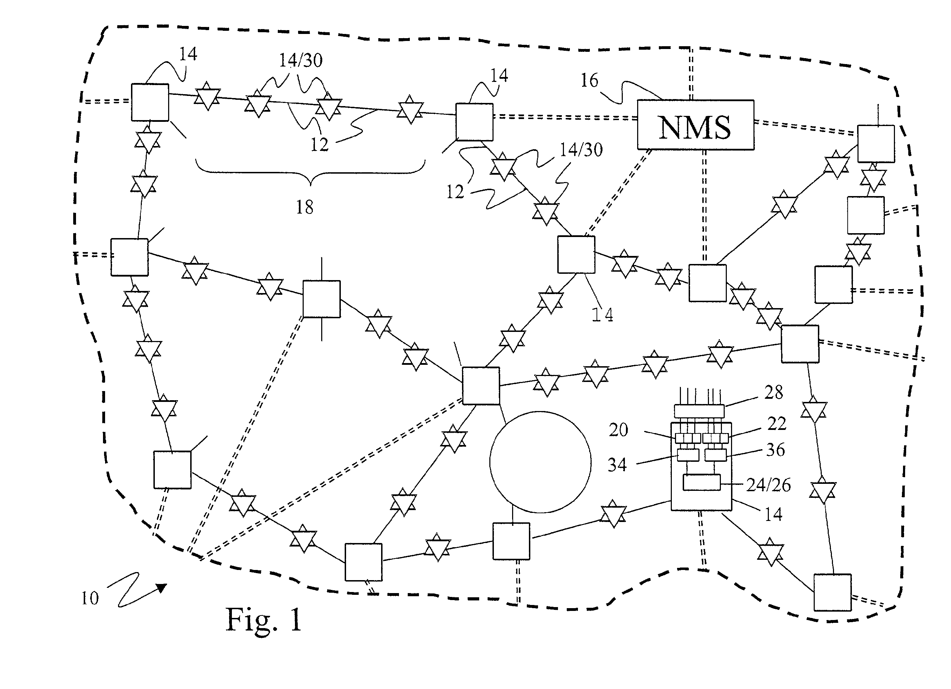

Fig. 1 illustrates an optical communications system 10 which includes optical paths 12 connecting nodes and network elements 14. Advantages of the present invention can be realized with many system 10 configurations and architectures, such as an all optical network, one or more point to point links, one or more rings, a mesh, other architectures, or combinations of architectures. The system 10 illustrated in Fig. 1 is a multi-dimensional network, which can be implemented, for example, as an all optical mesh network, as a collection of point to point links, or as a combination of architectures. The system 10 can employ various signal formats, and can also convert between formats. The system 10 can also include more or less features than those illustrated herein, such as by including or deleting a network management system ("NMS") 16 and changing the number, location, content, configuration, and connection of nodes 14.

The optical paths 12 can include guided and unguided transmission media, such as one or more optical fibers, ribbon fibers, planar devices, and free space devices, and can interconnect the nodes 14 providing optical communication paths through the system 10. Various types of transmission media can be used, such as dispersion shifted ("DSF"), non-dispersion shifted ("NDSF"), non-zero dispersion shifted ("NZDSF"), dispersion compensating ("DCF"), polarization maintaining ("PMF"), single mode ("SMF"), multimode ("MMF"), other types of transmission media, and combinations of transmission media. Furthermore, the transmission media can be doped, such as with erbium, germanium, neodymium, praseodymium, ytterbium, other rare earth elements, other dopants, and mixtures thereof. The paths 12 can carry one or more uni- or bi-directionally propagating optical signal channels or wavelengths. The optical signal channels can be treated individually or as a single group, or they can be organized into two or more wavebands or spectral groups, each containing one or more optical signal channel. The optical signal channels within a spectral group are all treated the same. For example, all optical signal channels in a spectral group are switched in the same manner, and all are dropped at the same locations, even if every optical signal channel in the spectral group is not utilized at every location at which it is dropped. The use of spectral groups to treat groups of channels in the same manner is one way to efficiently manage large numbers of optical signal channels. One or more paths 12 can be provided between nodes 14 and can be connected to protection switching devices and/or other redundancy systems. The optical path 12 between adjacent nodes 14 is typically referred to as a link 18, and the optical path 12 between adjacent components along a link 18 is typically referred to as a span.

The nodes and network elements 14 can include one or more signal processing devices including one or more of various optical and/or electrical components. The nodes 14 can perform network functions or processes, such as switching, routing, amplifying, multiplexing, combining, demultiplexing, distributing, or otherwise processing optical signals. For example, nodes 14 can include one or more transmitters 20, receivers 22, switches 24, add/drop multiplexers 26, amplifiers 30, interfacial devices 28, multiplexers/combiners 34, and demultiplexers/distributors 36, as well as filters, dispersion compensating and shifting devices, monitors, couplers, splitters, and other devices. One embodiment of one node 14 is illustrated in Fig. 1, although the nodes 14 can have many other variations and embodiments.

The NMS 16 can manage, configure, and control nodes 14 and can include multiple management layers that can be directly and indirectly connected to the nodes 14. The NMS 16 can be directly connected to some nodes 14 via a data communication network (shown in broken lines) and indirectly connected to other nodes 14 via a combination of a directly connected node and communications paths in the optical system 10. The data communication network can, for example, be a dedicated network, a shared network, or a combination thereof. A data communications network utilizing a shared network can include, for example, dial-up connections to the nodes 14 through a public telephone system. The NMS 16 can reside at one or more centralized locations and/or can be distributed among components in the system 10. Mixed data or supervisory channels can be used to provide connections between the network elements of the NMS 16, which can be located in nodes 14 or remote from nodes 14. The supervisory channels can be transmitted within and/or outside the signal wavelength band and on the same medium or a different medium than the wavelength band.

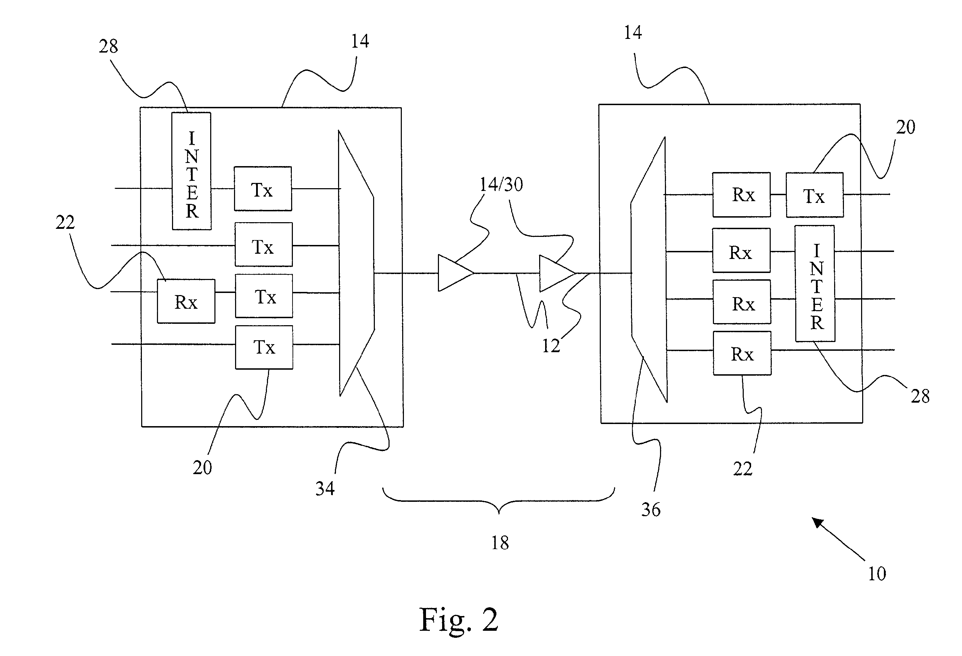

Fig. 2 illustrates another embodiment of the system 10 including a link 18 of four nodes and network elements 14. That system 10 can, for example, be all or part of a point to point system 10, or it may be part of a multi-dimensional, mesh, or other system 10. One or more of the nodes 14 can be connected directly to the network management system 16 (not shown). If the system 10 is part of a larger system, then as few as none of the nodes 14 can be connected to the network management system 16 and all of the nodes 14 can still be indirectly connected to the NMS 16 via another node in the larger system 10.

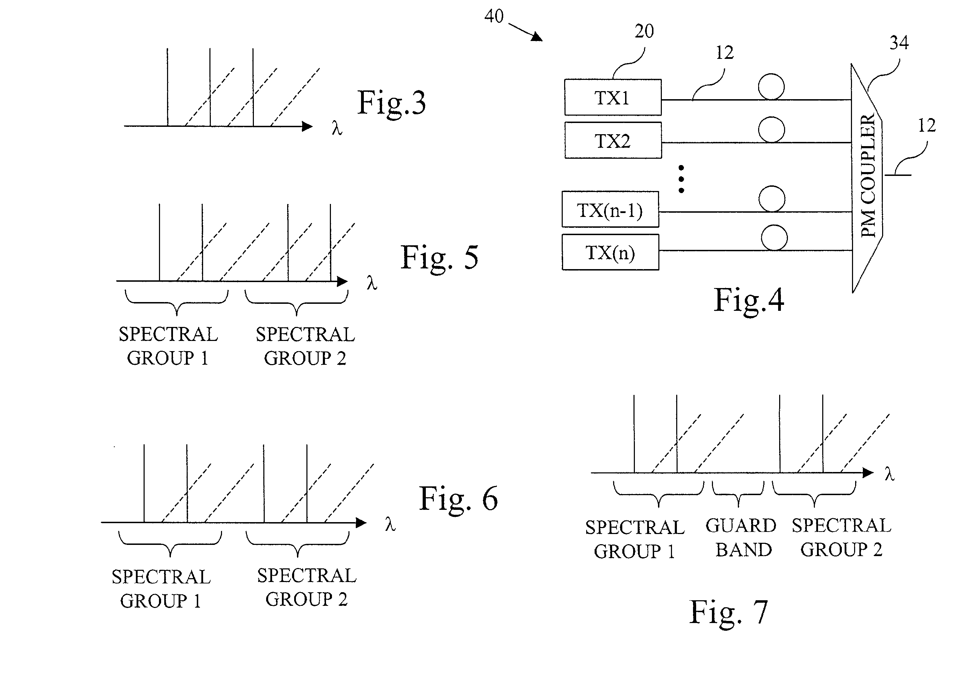

Fig. 3 illustrates a signal profile of several signal channels which form a spectral group and which are polarization alternated. The signal channels within the spectral group are polarization alternated such that each signal channel within the spectral group has a polarization which is orthogonal to that of the adjacent channels in the spectral group. However, unlike prior art systems, the polarization orientation of signal channels in one spectral group are not controlled relative to the polarization orientation of signal channels in all other spectral groups. Nonetheless, polarization alternating according to the present invention improves transmission performance and capacity, such as by reducing non-linear effects occurring between channels, thereby allowing channels to be closer together in the frequency domain. Although the present invention will be described in terms of polarization alternating in which the signals are orthogonal, advantages of the present invention can be realized by polarization alternating signals at orientations other than orthogonal. For example, each successive channel may have a polarization orientation offset by 120 degrees from adjacent channels, so that the same polarization orientation is used every three channels. Other variations are also possible depending on the particular application, such as using different polarization orientations and mixing polarization orientations. Furthermore, although the present invention is described in terms of repeating, evenly-spaced polarization alternating patterns, it is possible to realize benefits of the present invention with irregular polarization alternating patterns.

Fig. 4 illustrates one embodiment of a "sub-rack" 40 according to the present invention which can be used to produce polarization alternated signals. In that embodiment, several transmitters 20 are connected to a polarization maintaining coupler 34 via polarization maintaining fiber 12. The invention may also utilize polarization maintaining wavelength division multiplexers or similar devices in place of the couplers. The transmitters 20 produce polarized optical signals, and the polarization of the optical signals is maintained in a known orientation in the polarization maintaining fiber 12 and the polarization maintaining coupler 34. Polarization alternating can be affected by rotating some of the polarization maintaining fiber 12. For example, the polarization maintaining fiber 12 corresponding to the odd numbered transmitters 20 can be rotated ninety degrees relative to the fibers 12 corresponding to the adjacent, even numbered transmitters 20. The rotation can be done at the transmitters 20 or at the inputs to the coupler 34. As a result, the polarization of the signal channels will possess the desired polarization when combined in the polarization maintaining coupler 34. After the signals are coupled, they will retain their relative polarization, even if they are traveling in non-polarization maintaining fiber 12 or devices.

Signals channels can be added and/or dropped at various locations within the system 10. Typically, most of the fiber 12 in a system 10 is not polarization maintaining fiber. As a result, optical signals will rotate within the fiber 12, although signals which are transmitted together will retain their polarization orientation relative to each other. However, it is difficult to predict the orientation of those signal channels relative to the fiber 12 or relative to other signal channels which are added at another point in the system 10. In the present invention, signal channels are added and dropped in spectral groups, and polarization alternating is performed on channels within each spectral group. However, the relative polarization of adjacent spectral groups is not controlled. As a result, channels at the edge of adjacent spectral groups can have a relative polarization orientation which varies from parallel to orthogonal. If the channels at the edge of adjacent spectral groups have a parallel polarization orientation, the transmission performance for those channels will not be as good as when the polarization orientation is orthogonal. Such performance degradation can be mitigated by providing additional spacing between spectral groups, sometimes called a "guard band". Even without additional spacing between spectral groups, however, only the adjacent channels at the edges of the spectral groups are at risk of being parallel with an adjacent channel, which still provides for superior overall transmission performance than is the case when polarization alternating is not employed. In most cases, however, there will be at least some non-parallel polarization orientation with all adjacent channels.

A further advantage of the present invention is that the number of polarization maintaining connections and splices is significantly reduced. Typically, only two or three polarization maintaining connections are required in each signal path. For example, two polarization maintaining connections are used in the embodiment illustrated in Fig. 4, one polarization maintaining connection between the fiber 12 and the transmitter 20, and one polarization maintaining connection between the fiber 12 and the coupler 34. Additional polarization maintaining connections may be used, for example, if more than one polarization maintaining coupler is used to couple the signals forming a single spectral group, or if the relative polarization of more than one spectral group is to be controlled. The later example may be advantageous if, for example, more than one spectral group is being added at the same location, such that alternating polarization can be controlled over more than one spectral group without the need to determine the relative polarization of signals in non-polarization maintaining fiber 12.

Fig. 5 illustrates a signal profile for two adjacent spectral groups which are added to the system 10 independent of each other. In that example, the polarization orientation of the adjacent signal channels at the edges of the spectral groups happens to be parallel. Fig. 6 illustrates a signal profile for two adjacent spectral groups which are added to the system 10 independent of each other, and in which the polarization orientation of adjacent signal channels at the edges of the spectral groups happens to be orthogonal. Fig. 7 illustrates a signal profile for two adjacent spectral groups which are added to the system independent of each other, and in which additional spacing, a guard band, is provided between the spectral groups. The guard band mitigates performance degradation in the event channels at the edges of the spectral groups happen to be parallel. The guard band may be, for example, the equivalent of one channel spacing. More or less spacing may also be utilized, depending on the particular application and the performance required.

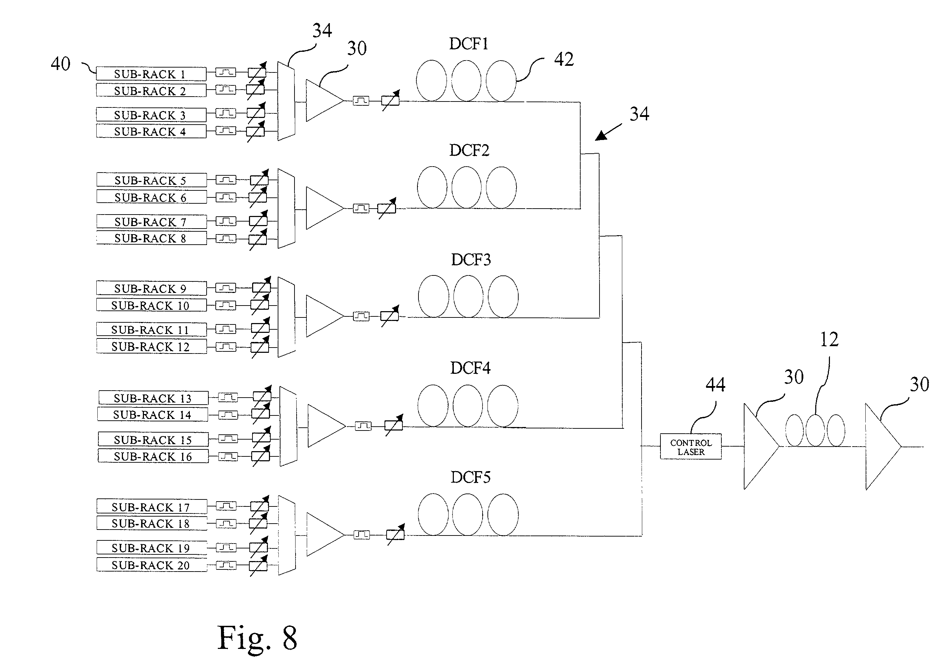

Fig. 8 illustrates another embodiment of the present invention in which several groups of transmitters 20, such as those illustrated in Fig. 4, are utilized at the same location to transmit several spectral groups. For clarity, the illustrated embodiment shows transmitters 20 at only one location, although transmitters 20 are typically located at several locations in the system 10. That embodiment illustrates a transmit portion of a system which is modular at the spectral group level, according to the teachings of the present invention. For example, each sub-rack 40 produces a spectral group, and optical signals within each spectral group are polarization alternated on a spectral group level in the sub-racks 40, as described above. Other processing can also be performed on the spectral group level, such as filtering, attenuation, amplification, etc. Furthermore, signal processing may also be performed in a modular manner in groups of two or more spectral groups having similar characteristics.

For example, sub-racks 1-4 produce spectral groups 1-4. Optical signals from spectral groups 1-4 are filtered and attenuated at the spectral group level before being coupled together. After being coupled together, spectral groups 1-4 are processed together, for amplification, filtering, attenuation, and dispersion compensation. Similar modularity is applied to other spectral groups in Fig. 8, and lower level modular sections are combined to form higher level modular sections until all of the spectral groups are coupled together.

This modularity simplifies signal processing and allows for more precise treatment of optical signals. For example, each dispersion compensation stage 42, individually labeled DCF1-DCF8, in Fig. 8 can be tailored to the spectral groups passing through that stage, without regard to the effect that the dispersion compensating stage might have had on other spectral groups, thereby providing a differentiated dispersion compensation approach on a spectral group basis, or on a basis of several combined spectral groups. Other differentiated processing may also be performed, such as amplification, filtering, and attenuation.

For example, the design of the transmission site in Fig. 8 is modular at the spectral group level between the sub-racks 40 and the 4:1 couplers 34, and is modular in groups of four spectral groups between the 4:1 couplers 34 and the 2:1 couplers 34. This modularity simplifies the design and makes it easier to change a design to add and remove spectral groups. Differences exist in the modular sections to accommodate specific characteristics of the spectral groups. For example, different spectral groups may pass through different numbers of couplers 34 and, thereby, experience different amounts of attenuation. Those and other variations can be addressed by modifying characteristics of the different modular sections. For example, proper selection of dispersion compensating fiber 42 can offset attenuation differences in the signal paths.

Spectral group modularity is also applicable to other parts of the system, such as receivers and add/drop multiplexers. For example, by dropping signals in spectral groups, the drop multiplexers and receivers can utilize modular designs analogous to that of the transmitter 20 in Fig. 8.

In the illustrated embodiment filters and variable attenuators may be used to groom the signals. Dispersion compensating fiber may also be provided to compensate for chromatic dispersion introduced by the system. The signals may be further combined in several steps until all of the signals are on a single fiber. Control lasers 44, amplifiers 30, and "pre-chirp" devices may also be used to prepare the signals for transport in the system 10.

## Claims

1. An optical communications system, wherein the invention comprising:
a first group of transmitters producing a first spectral group containing at least two optical signals, wherein each of the signals in the first spectral group has a polarization orientation which is non-parallel to adjacent signals within the first spectral group; and
a second group of transmitters producing a second spectral group containing at least two optical signals, wherein each of the signals in the second spectral group has a polarization orientation which is non-parallel to adjacent signals within the second spectral group, and wherein the polarization orientation of the first spectral group is independent of the polarization orientation of the second spectral group.

2. The system of claim 1, wherein:
each of the signals in the first spectral group has a polarization orientation which is orthogonal to adjacent signals within the first spectral group; and
each of the signals in the second spectral group has a polarization orientation which is orthogonal to adjacent signals within the second spectral group.

3. The system of claim 1, wherein:
each of the signals in the first spectral group has a polarization orientation which is 120 degrees relative to adjacent signals within the first spectral group; and
each of the signals in the second spectral group has a polarization orientation which is 120 degrees relative to adjacent signals within the second spectral group.

4. The system of claim 1, wherein:
each of the signals in the first spectral group has a polarization orientation which is 120 degrees relative to adjacent signals within the first spectral group; and
each of the signals in the second spectral group has a polarization orientation which is orthogonal relative to adjacent signals within the second spectral group.

5. The system of claim 1, further comprising at least one additional group of transmitters producing at least one additional spectral group, wherein each additional spectral group contains at least two optical signals, wherein each signal in each additional spectral group has a polarization orientation which is non-parallel to adjacent signals within that spectral group, and wherein the polarization orientation of each additional spectral group spectral group is independent of the polarization orientation of other spectral groups.

6. The optical communications system of claim 1, further comprising at least one add/drop multiplexer, wherein the add/drop multiplexer adds and drops signals in groups no smaller than one spectral group.

7. The optical communications system of claim 1, wherein the first and second groups of transmitters are located at different locations within the optical communications system.

8. The optical communications system of claim 1, wherein the first and second groups of transmitters are located at the same location within the optical communications system.

9. The optical communications system of claim 1, wherein the first and second groups of transmitters produce optical signals having polarization orientations without determining polarization orientation of optical signals already being transmitted within the optical communications system.

10. The optical communications system of claim 1, wherein the first group of transmitters includes:
at least two transmitters producing polarized optical signals;
a polarization maintaining coupler;
at least two polarization maintaining fibers connecting the transmitters to the coupler, wherein the polarization maintaining fiber is connected to the transmitters and the coupler such that optical signals at adjacent optical wavelengths have non-parallel polarization orientations.

11. The system of claim 10, further comprising a non-polarization maintaining fiber connected to an output of the coupler.

12. The system of claim 10, wherein the polarization maintaining fiber is connected to the transmitters and the coupler such that optical signals at adjacent optical wavelengths have orthogonal polarization orientations.

13. The optical communications system of claim 1, wherein:
the first spectral group of optical signals has a first range of wavelengths and wherein the optical signals are separated by an optical signal wavelength spacing;
the second spectral group of optical signals has a second range of wavelengths and wherein the optical signals are separated by an optical signal wavelength spacing; and wherein
the first and second spectral groups are separated by a guard band which is greater than the optical signal wavelength spacing.

14. The optical communications system of claim 13, wherein the spectral group guard band is twice as large as the optical signal wavelength spacing.

15. A method of transmitting optical signals, wherein the invention comprising:
transmitting a first spectral group including at least two signals and wherein the signals in the first spectral group have polarization orientations which are non-parallel to adjacent signals in the first spectral group;
transmitting a second spectral group including at least two signals wherein the signals in the second spectral group have polarization orientations which are non-parallel to adjacent signals in the second spectral group, wherein transmitting the second spectral group is independent of the polarization orientation of the first spectral group.

16. The method of claim 15, wherein:
the signals in the first spectral group have polarization orientations which are orthogonal to adjacent signals in the first spectral group;
the signals in the second spectral group have polarization orientations which are orthogonal to adjacent signals in the second spectral group; and
a signal at an edge of the first spectral group has a polarization orientation which is not orthogonal to an adjacent signal at an edge of the second spectral group.

17. The method of claim 15, wherein transmitting the first and second spectral groups includes providing a guard band between the first and second spectral groups.

18. The method of claim 15, further comprising transmitting at least one additional spectral group including at least two signals and wherein the signals in the additional spectral group have polarization orientations which are non-parallel to adjacent signals in the additional spectral group.

19. The method of claim 15, further comprising dropping one of the first and second spectral groups.

20. A method of transmitting optical signals, wherein the invention comprising:
separately transmitting at least two polarized optical signals which form a first spectral group;
separately providing the signals of the first spectral group in a known polarization to a first polarization maintaining optical coupler;
coupling the signals of the first spectral group to form a coupled first spectral group such that the signals in the coupled first spectral group have polarization orientations which are non-parallel to adjacent signals in the coupled first spectral group;
providing the coupled first spectral group to a non-polarization maintaining fiber;
separately transmitting at least two polarized optical signals which form a second spectral group;
separately providing the signals of the second spectral group in a known polarization to a second polarization maintaining optical coupler;
coupling the signals of the second spectral group to form a coupled second spectral group such that the signals in the coupled second spectral group have polarization orientations which are non-parallel to adjacent signals in the coupled second spectral group; and
providing the coupled second spectral group to the non-polarization maintaining fiber such that the polarization orientation of the second spectral group is independent of the polarization orientation of the fist spectral group.

21. The method of claim 20, further comprising providing a guard band between the first and second spectral groups which does not include optical signals from either of the first and second spectral groups.
